(19) Europäisches Patentamt

European Patent Office

Office européen des brevets

(11) **EP 2 149 778 B1**

(12) **EUROPEAN PATENT SPECIFICATION**

(45) Date of publication and mention
of the grant of the patent:
**19.06.2013 Bulletin 2013/25**

(51) Int Cl.:
***G01B 9/02*** (2006.01)

(21) Application number: **09166890.5**

(22) Date of filing: **30.07.2009**

(54) **Multiwavelength interferometric displacement measuring method and apparatus**

Verfahren und Vorrichtung zur Messung des Versatzes mittels Interferometrie mit mehreren Wellenlängen

Procédé et appareil de mesure de déplacement interférométrique à plusieurs longueurs d'onde

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 JP 2008198185**

(43) Date of publication of application:
**03.02.2010 Bulletin 2010/05**

(73) Proprietor: **Mitutoyo Corporation**
**Kawasaki-shi**
**Kanagawa 213-8533 (JP)**

(72) Inventor: **Kawasaki, Kazuhiko**
**Ibaraki 305-0854 (JP)**

(74) Representative: **Skone James, Robert Edmund**
**Gill Jennings & Every LLP**
**The Broadgate Tower**
**20 Primrose Street**
**London EC2A 2ES (GB)**

(56) References cited:
**EP-A- 1 750 086     JP-A- 2008 051 674**

• **M. KAJIMA, H. MATSUMOTO: SPIE, PO BOX 10 BELLINGHAM WA 98227-0010 USA, vol. 6616, 18 June 2007 (2007-06-18), pages 66160G-1-66160G-6, XP040242417**
• **SCHUHLER N ET AL: "Frequency-comb-referenced two-wavelength source for absolute distance measurement" OPTICS LETTERS OPT. SOC. AMERICA USA, vol. 31, no. 21, 1 November 2006 (2006-11-01), pages 3101-3103, XP002556913 ISSN: 0146-9592**
• **O. CIP, B. MIKEL, J. LAZAR: 26 April 2006 (2006-04-26), SPIE, PO BOX 10 BELLINGHAM WA 98227-0010 USA , XP040223400 * pages 61881F-2 - pages 61881F-7 * * abstract ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a multiwavelength interferometric displacement measuring method and apparatus, and more particularly to improvements in a multiwavelength interferometric displacement measuring method and apparatus which interferometrically measure the distance from the body of an interferometer to an object or a displacement, by using laser beams of plural wavelengths, obtaining interference measurement values that are measured at respective wavelengths, and expanding a measurement range by a synthetic wavelength that is equivalently longer than the wavelengths of the laser beams from combinations of the wavelengths.

### RELATED ART

As a method of accurately measuring the distance to an object (referred to also as a target) or a displacement of the object, a distance measurement using lightwave interference is known.

The distance (displacement) measurement using lightwave interference is a method of measuring a distance (displacement) which uses a wavelength of several hundreds of nm as a scale (see Patent Reference 1).

However, the method has a drawback that, in the case where a displacement or shape of an object is measured by using a lightwave interferometer as a sensor, a sudden displacement which is larger than a half of the wavelength $\lambda$, and the shape of a step cannot measured.

By contrast, Non-patent Reference 1 and the like show a method in which results of measurements at plural wavelengths are combined with one another, and the measurement range is expanded by a synthetic wavelength. The method uses a phenomenon that, when a difference $\phi_S$ between a phase $\phi_l$ obtained from a wavelength $\lambda_1$ and a phase $\phi_2$ obtained from a wavelength $\lambda_2$ is calculated as shown in following Expression (1), a result which is equivalent to that of an interferometric measurement using a synthetic wavelength $\lambda_S$ indicated by following Expression (2).

$$\phi_S = \phi_2 - \phi_1 \qquad \ldots (1)$$

$$\lambda_S = \lambda_2\lambda_1/|\lambda_2 - \lambda_1| \qquad \ldots (2)$$

In the case where the measurement range is to be expanded by a synthetic wavelength of two wavelengths, it is important to correctly produce the wavelength (frequency) of the difference indicated by Expression (2). When synthesization is performed while the difference of two wavelengths is reduced and the wavelengths are largely expanded, particularly, correctness is further required. An error $\delta\lambda_S$ of a synthetic wavelength with respect to an error $\delta\Delta\lambda$ of a difference wavelength $\Delta\lambda$ is approximately indicated by following Expression (3).

$$\lambda_S = \lambda_2\lambda_1/|\lambda_2 - \lambda_1| \sim \lambda_1{}^2/\Delta\lambda \qquad \ldots (2)'$$

$$\delta\lambda_S \sim (\lambda_1{}^2/\Delta\lambda^2) \bullet \delta\Delta\lambda \qquad \ldots (3)$$

For example, in the case where $\lambda$ =1 $\mu$m and $\Delta\lambda$ = 0.001 $\mu$m are set, and a synthetic wavelength $\lambda_S$ of 1 mm is produced, when a small error of 0.000001 $\mu$m which corresponds to six digits with respect to $\lambda$ occurs, the error $\delta\lambda_S$ of the synthetic wavelength $\lambda_S$ reaches up to 1 $\mu$m.

Namely, when the measurement range is to be expanded by the synthetic wavelength method, it is required to use two lasers in which the wavelength produced by a desired wavelength difference has a very high stability, or expensive lasers which can be wavelength-scanned with a very high accuracy are necessary.

[Patent Reference 1] JP-A-2000-146517
[Patent Reference 2] JP-A-2004-340690
[Non-patent Reference 1] J. E. Greivenkamp and J. H. Bruning: "Phase Shifting Interferometry In Optical Shop Testing 2ed. page 560, Daniel Malacara, ed: John Wiley & Sons, Inc.

However, the kinds of lasers in which the frequency is correctly set are not large in number. The kinds of lasers which can be currently easily available are further limited. Therefore, the situation where the kinds of available lasers of a laser wavelength which is preferable in measurement principle are restricted impedes effective or easy realization of a synthetic wavelength.

"Super-heterodyne laser interferometer using femtosecond frequency comb for linear encoder calibration system" by Kajima et al.. Proc. of SPIE, Vol 6616 (2007), discloses an interferometer using two ECLD laser sources stabilised against two different modes of an FS comb. "Frequency-comb-referenced two wavelength source for absolute distance measurement" by Schuhler et al., Optics Letters, Volume 31, Number 21, Page 3101 (1 November 2006), discloses a two wavelength interferometry technique in which an Nd;YAG laser and an ECLD laser are stabilised against an FS comb via two beat detection units. "Fast wavelength-scanning interferometry technique with derivative detection of quadrature

signals" by Čip et al., Proc of SPIE, Vol 6188 (2006), discloses a laser interferometer with a single wavelength tuneable laser stabilised against an optical comb.

## SUMMARY

The invention has been conducted in order to solve the problems of the prior art. It is an object of the invention to realize an economical interferometric displacement measurement having a wider range, without using an expensive laser having a high stability, or an expensive laser in which the wavelength is accurately variable.

[0014] [0013a] The invention provides a multiwavelength interferometric displacement measuring method according to claim 1 hereto, and an apparatus as set out in claim 8.

According to the invention, a multiwavelength interferometric displacement measuring method includes steps of: obtaining, by using laser beams of a plurality of wavelengths, interference measurement values (interference phases due to reference and measurement light beams) that are measured at the respective wavelengths; interferometrically measuring a distance from a body of an interferometer to an object or a displacement by expanding a measurement range by a synthetic wavelength that is equivalently longer than the wavelengths of the laser beams from combinations of the wavelengths; and measurement the wavelengths of the laser beams by using an optical comb and one detector on to which the laser beams of the plurality of wavelengths are simultaneously incident.

The multiwavelength interferometric displacement measuring method further includes: obtaining laser beams of a plurality of predetermined wavelengths by performing a feedback control based on an oscillation wavelength of a variable wavelength laser measured by using the optical comb.

In the multiwavelength interferometric displacement measuring method, the step of the obtaining the interference measurement values is to cause a variable wavelength laser to oscillate at an arbitrary wavelength to obtain interference measurement values at the plurality of wavelengths, wherein the step of measuring the wavelengths of the laser beams is to measure wavelengths of laser beams at timings when the respective interference measurement values are obtained by the optical comb, and wherein the step of interferometrically measuring is to calculate the distance from the body of the interferometer to the object based on the obtained interference measurement values and the measured wavelengths.

In the multiwavelength interferometric displacement measuring method, the step of the obtaining the interferometric measurement values is to obtain the interferometric measurement values based on the wavelengths of laser beams oscillated from a plurality of lasers, wherein the step of measuring the wavelengths of the laser beams is to measure the wavelengths of laser beams oscillated from the plurality of lasers by the optical comb, and wherein the step of interferometrically measuring is to calculate the distance from the body of the interferometer to the object based on the obtained interference measurement values and the measured wavelengths.

In the multiwavelength interferometric displacement measuring method, the step of measuring the wavelengths of the laser beams is to measure the wavelengths by one frequency measuring system including the optical comb.

In the multiwavelength interferometric displacement measuring method, the step of obtaining the interference measurement values is to , when interference measurement values are to be obtained at the plurality of wavelengths, perform an interferometric measurement by performing a control for correctly giving a wavelength difference relatively with respect to one wavelength, or measure a wavelength difference at a timing when measurement values are obtained at wavelengths as a relative difference with respect to one wavelength.

In the multiwavelength interferometric displacement measuring method, the step of interferometrically measuring is to calculate a frequency difference while adding a value corresponding to an order of the optical comb to a beat frequency which is generated by the laser beam of one wavelength and the optical comb, and a beat frequency which is generated by the laser beam of another wavelength and the optical comb, and to convert the frequency difference to a wavelength difference.

In the multiwavelength interferometric displacement measuring method, the step of interferometrically measuring is to calculate a phase difference at a synthetic wavelength of a combination of two of three or more wavelengths, and determine the distance by using a difference in resolution.

A multiwavelength interferometric displacement measuring apparatus according to the invention includes: a detector which, by using laser beams of a plurality of wavelengths, obtains interference measurement values at the respective wavelengths; an analyzer which interferometrically measures a distance from a body of an interferometer to an object or a displacement, by expanding a measurement range by a synthetic wavelength that is equivalently longer than the wavelengths of the laser beams from combinations of the wavelengths; and a frequency-measuring system comprising an optical comb generator which generates an optical comb for measuring the wavelengths of the laser beams, and one detector onto which the laser beams of a plurality of wavelengths are simultaneously incident.

The multiwavelength interferometric displacement measuring apparatus further includes a controller which measures an oscillation wavelength of a variable wavelength laser by using the optical comb, and performs a feedback control, to obtain a plurality of predetermined wavelengths.

The multiwavelength interferometric displacement measuring apparatus further includes a variable wavelength laser which outputs the laser beams of an arbitrary wavelength; and a frequency measuring apparatus which measures the wavelengths of the laser beams when the respective interference measurement values are obtained, by the optical comb, wherein the analyzer calculates the distance from the body of the interferometer to the object based on the measured wavelengths.

The multiwavelength interferometric displacement measuring apparatus further includes a plurality of lasers which output the laser beams of the respective difference wavelengths; and a frequency measuring apparatus which measures the wavelengths of laser beams oscillated from the lasers by the optical comb, wherein the analyzer calculates the distance from the body of the interferometer to the object based on the measured wavelengths.

The multiwavelength interferometric displacement measuring apparatus further includes one frequency measuring system which measures the wavelengths, using the optical comb.

In the multiwavelength interferometric displacement measuring apparatus, the detector, when interference measurement values are to be obtained at the plurality of wavelengths, performs an interferometric measurement by performing a control for correctly giving a wavelength difference relatively with respect to one wavelength, or measures a wavelength difference at a timing when measurement values are obtained at wavelengths, as a relative difference with respect to one wavelength.

In the multiwavelength interferometric displacement measuring apparatus, the analyzer calculates a frequency difference while adding a value corresponding to an order of the optical comb to a beat frequency which is generated by the laser beam of one wavelength and the optical comb, and a beat frequency which is generated by the laser beam of another wavelength and the optical comb, and converts the frequency difference to a wavelength difference.

In the multiwavelength interferometric displacement measuring apparatus, the analyzer calculates a phase difference at a synthetic wavelength of a combination of two of three or more wavelengths, and determines the distance by using a difference in resolution.

According to the invention, it is possible an economical interferometric displacement measurement having a wide range, without using expensive lasers having a high stability, or expensive lasers in which the wavelength is accurately variable. Therefore, the production cost of the apparatus can be reduced.

BRIEF DESCRIPTION OF THE DRAWINGS

Fig. 1 is a view illustrating an optical comb used in the invention.

Fig. 2 is a block diagram showing the configuration of an example of a multiwavelength interferometer.

Fig. 3A is a view schematically showing the spectrum of the optical comb and the laser beams of the predetermined wavelengths $\lambda_1$, $\lambda_2$.

Fig. 3B is a view schematically showing the manner of the frequency change of a beat signal when the wavelength is variable.

Fig. 4 is a block diagram showing the configuration of an embodiment of the invention.

Fig. 5 is a view showing examples of the spectrum of a laser and the frequency of a beat signal used in the invention.

Fig. 6 is a block diagram showing the configuration of another example of a multiwavelength interferometer .

Fig. 7 is a block diagram showing the configuration of a second embodiment of the invention.

Fig. 8 is a block diagram showing the configuration of a further example of a multiwavelength interferometer.

Fig. 9 is a block diagram showing the configuration of a third embodiment of the invention.

DETAILED DESCRIPTION

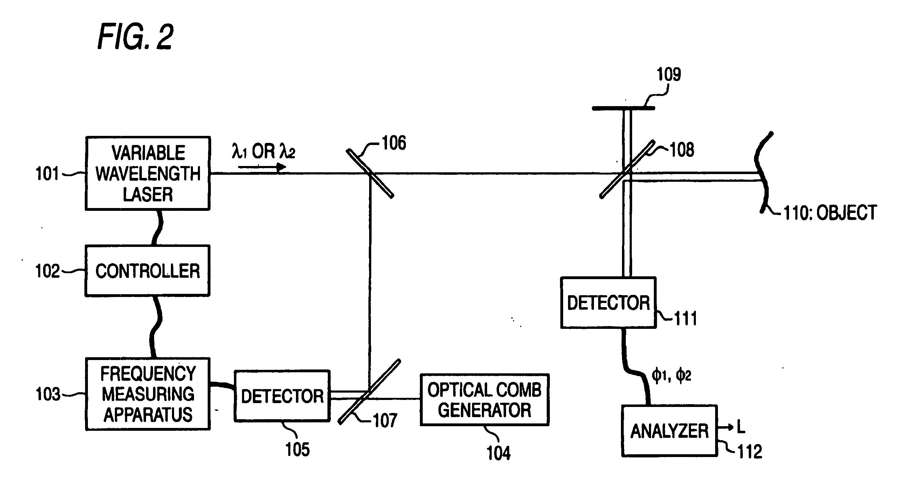

Hereinafter, embodiments of the invention will be described in detail with reference to the drawings. Fig. 2 shows the configuration of a displacement measuring apparatus which is a described as a not claimed example.

In the example, the laser beam output from a variable wavelength (frequency) laser 101 is split by a beam splitter 106. One light beam is split by a beam splitter 108. One light beam is reflected by a reference mirror 109 configured by a planar mirror or the like, to be formed as a reference light beam. The other light beam irradiates an object 110 which is the measurement object of the distance (displacement), to obtain a light beam reflected therefrom as a measurement light beam. The measurement light beam is superimposed on the reference light beam by the beam splitter 108. A detector 111 receives signals of the reference and measurement light beams. On the basis of an interference intensity signal, the distance (displacement of the object 110) from the body of an interferometer to the object 110 is measured.

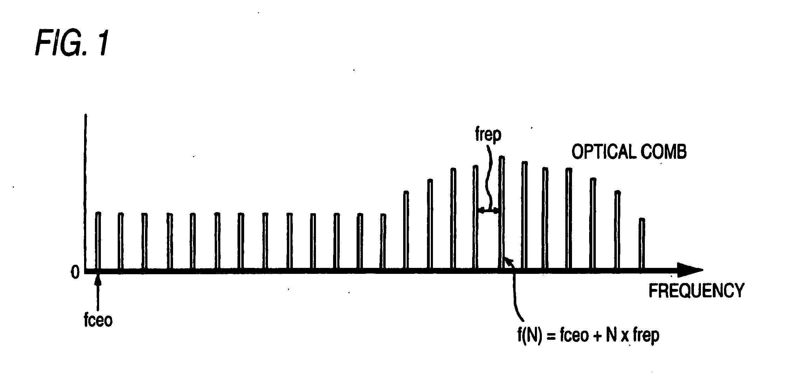

The light beam reflected from the beam splitter 106 is superimposed on an optical comb generated from an optical comb generator 104 through a beam splitter 107, and then received by a detector 105. A frequency measuring apparatus 103 frequency-analyzes a beat signal of the optical comb generated from the optical comb generator 104 and the laser beam oscillated from the variable wavelength laser 101, and a controller 102 feedback controls the oscillation wavelength (frequency) of the variable wavelength laser 101. As shown in Fig. 1, the optical comb is a laser beam in which lights of various wavelengths are arranged with equal intervals, like the teeth of a comb. In Fig. 1, $f_{rep}$ is a frequency spacing of the optical comb, $f_{cco}$ is a fraction, and N is the order.

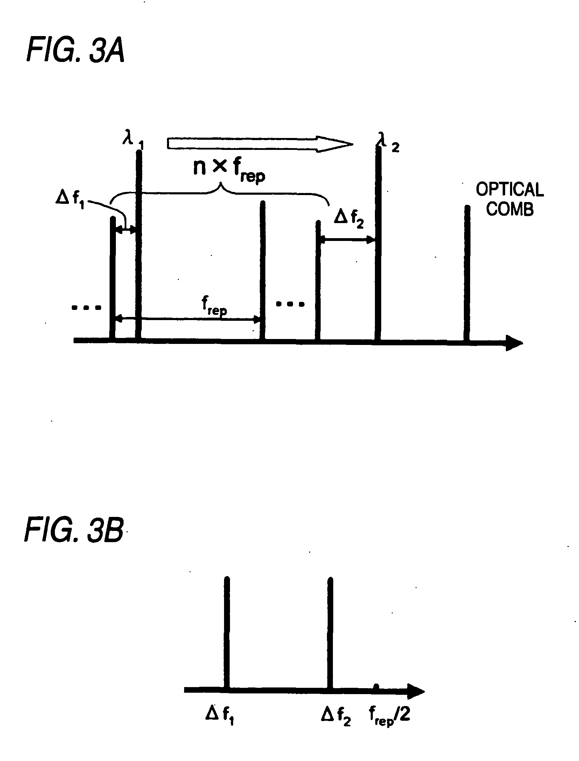

In the example, the variable wavelength laser 101 oscillates at a predetermined wavelength $\lambda_1$, and the phase $\phi_1$ is calculated from an obtained interference signal. The wavelength $\lambda_1$ can be obtained by accurately measuring the frequency (oscillation wavelength) of the variable wavelength laser 101 based on a beat frequency with respect to the optical comb generated the optical comb generator104, and controlling the variable wavelength laser 101 so as to attain the predetermined wavelength $\lambda_1$. Fig. 3A is a view schematically showing the spectrum of the optical comb and the laser beams of the predetermined wavelengths $\lambda_1$, $\lambda_2$. Fig. 3B schematically shows the manner of the frequency change of the beat signal when the wavelength is variable. In Fig. 3A, $f_{rep}$ is a frequency spacing of the optical comb, n a difference of orders between modes of the optical comb which the wavelengths $\lambda_1$, $\lambda_2$ neighbor respectively, $\Delta f_1$ is a beat signal having the frequency of the difference between the laser beam of the wavelength $\lambda_1$, and the light of the optical comb adjacent to the laser beam of the wavelength $\lambda_1$, and $\Delta f_2$ is a beat signal having the frequency of the difference between the laser beam of the wavelength $\lambda_2$, and the light of the optical comb adjacent to the laser beam of the wavelength $\lambda_2$.

Next, while measuring the wavelength (frequency) by the beat signal with respect to the optical comb generated from the optical comb generator 104, the variable wavelength laser 101 oscillates at a predetermined wavelength $\lambda_2$ which is required for realizing a synthetic wavelength $\lambda_S$, and which is different from the wavelength $\lambda_1$. Then, an interference signal due to reflected light beams of the reference light beam and the measurement light beam is obtained, and an analysis value of the phase $\phi_2$ is obtained. Based on the difference $\phi_S$ ($\phi_S = \phi_2 - \phi_1$) between the two phases $\phi_1$, $\phi_2$ obtained from the Expression (1), conversion to the length using the synthetic wavelength $\lambda_S$ is performed, and the distance (displacement) L to the object 110 can be obtained in the form of the optical path length difference between the reference light beam and the measurement light beam within the range of $\lambda_S/2$ as shown in following Expression (4).

$$L = (\phi_S/2\pi)^*(\lambda_S/2) \qquad \dots (4)$$

The optical comb generator 104 can measure the frequency of light with an accuracy of 15 or more digits by using a cesium atomic clock as a reference. Therefore, the predetermined wavelengths $\lambda_1$, $\lambda_2$ can be controlled with an accuracy of up to 15 digits. Consequently, the wavelength $\lambda_S$ which is synthesized on the basis of the wavelengths $\lambda_1$, $\lambda_2$ can be realized with a sufficiently high accuracy.

The measurement procedure in this example is summarized as follows.

(1) The oscillation wavelength of the variable wavelength laser 101 is controlled to the designed wavelength $\lambda_1$.
(2) The interferometric measurement is performed to obtain the phase $\phi_1$.
(3) The oscillation wavelength of the variable wavelength laser 101 is controlled to the designed wavelength $\lambda_2$.
(4) The interferometric measurement is performed to obtain the phase $\phi_2$.
(5) The previously designed $\lambda_S$ and the difference $\phi_S$ between the phases $\phi_1$, $\phi_2$ is substituted in Expression (4) to calculate the distance L.

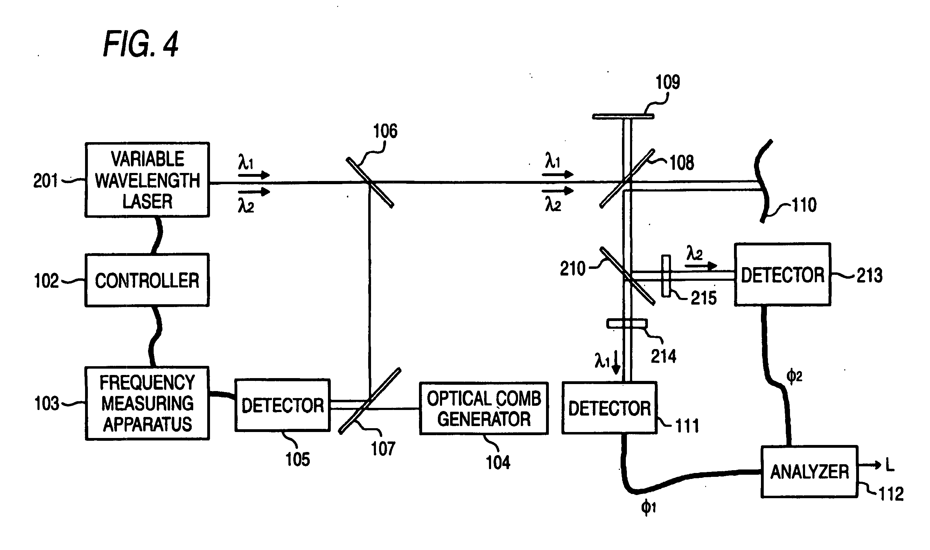

Fig. 2 shows the method in which the oscillation wavelength of the one variable wavelength laser 101 is made variable to the wavelengths $\lambda_1$, $\lambda_2$ and distances to the target are sequentially measured. In the embodiment of the invention shown in Fig. 4, a variable wavelength laser 201 which simultaneously outputs the laser beams of two or more wavelengths is used, and an optical system (a beam splitter 210, and bandpass filters 214, 215) in which an interference signal due to the predetermined wavelengths $\lambda_1$, $\lambda_2$ are split and the split signals are simultaneously received and the detectors 111, 213 is disposed. In this case, frequency (wavelength) measuring systems for the variable wavelength laser 201 and configured by the detector 105 and the frequency measuring apparatus 103 are prepared respectively for the wavelengths $\lambda_1$, $\lambda_2$, or, as shown in Fig. 4, one frequency measuring system may measure the both frequencies (wavelengths) $\lambda_1$, $\lambda_2$, and the laser may be controlled.

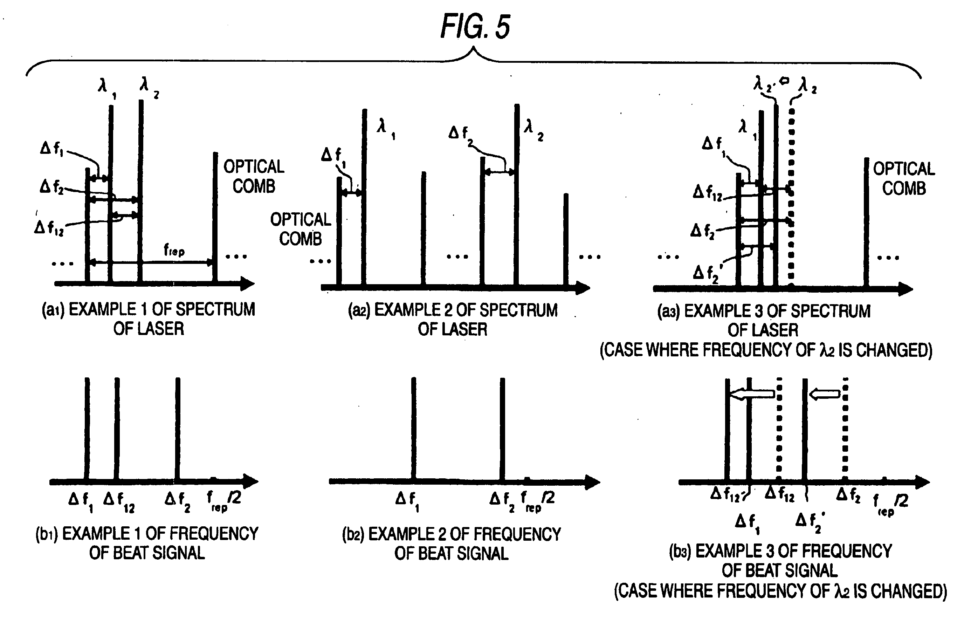

Fig. 5 diagrammatically shows examples of the oscillation spectrum of the laser and an interference beat signal obtained in the case of the spectrum. In the case where, as shown in ($a_1$) of Fig. 5, an interference beat signal of the laser beams of the wavelengths $\lambda_1$, $\lambda_2$ and the optical comb of the optical comb generator 104 is observed in a range of 1/2 of the frequency spacing $f_{rep}$ of the optical comb of the optical comb generator 104, beat signals $\Delta f_1$, $\Delta f_2$, $\Delta f_{12}$ the number of which is equal to that of combinations of the differences are observed as shown in ($b_1$) of Fig. 5. By contrast, in the case where, as shown in ($a_2$) of Fig. 5, the laser beams of the wavelengths $\lambda_1$, $\lambda_2$ interfere with different frequencies (orders) of the optical comb of the optical comb generator 144, the beat signals $\Delta f_1$, $\Delta f_2$ of frequencies of the differences of the laser beams of the wavelengths $\lambda_1$, $\lambda_2$ and respective neighboring lights of the optical comb are detected as shown in ($b_2$) of Fig. 5. Under such circumstances, when one (in the figure, $\lambda_2$) of the wavelengths is changed as shown in ($a_3$) of Fig. 5, the frequencies of the beat signals are changed correspondingly with the wavelength change. When this phenomenon is used, one frequency measuring system can distinguish the wavelengths $\lambda_1$, $\lambda_2$ from each other.

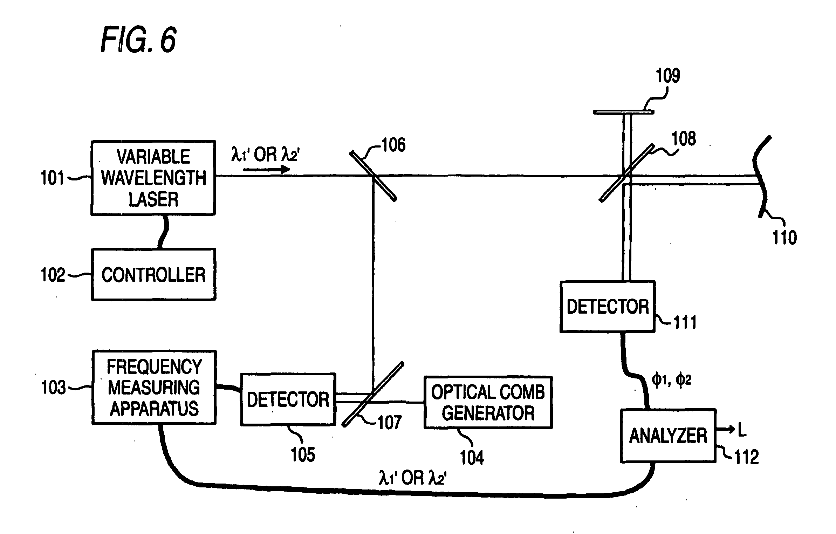

Another not claimed example of an interferometric measurement is shown in Fig. 6.

In the example, the variable wavelength laser 101 is caused to oscillate at an arbitrary wavelength $\lambda_1'$ to measure the phase $\phi_1$. Next, the laser is caused to oscillate at an arbitrary wavelength $\lambda_2'$ which is different from the wavelength $\lambda_1'$, to measure the phase $\phi_2$. The correct wavelengths at which the phases $\phi_1$, $\phi_2$ are respectively obtained are measured by the frequency measuring system configured by the detector 105, the frequency measuring apparatus 103, and the like, and the results are substituted in Expression (2) ($\lambda_S = \lambda_2\lambda_1/|\lambda_2 - \lambda_1|$) to calculate the synthetic wavelength $\lambda_S$. The synthetic wavelength is substituted together with the synthetic phase $\phi_S$ obtained from the phases $\phi_1$, $\phi_2$ in Expression (4), whereby the distance L to the object 110 can be calculated.

At this time, the value of the synthetic wavelength $\lambda_S$ varies depending on the values of the wavelengths $\lambda_1'$, $\lambda_2'$. However, only the conversion to the length using the synthetic wavelength $\lambda_S$ obtained from measured values is performed, and hence no influence is exerted on the measurement result.

In the example, a special apparatus for controlling the wavelength of the variable wavelength laser 101 is not required, and a laser in which the current is variable and the frequency can be easily changed, such as a semiconductor laser can be used. Therefore, the measuring apparatus can be very simplified.

The measurement procedure of this example is summarized as follows.

(1) The variable wavelength laser 101 is caused to oscillate at the arbitrary wavelength $\lambda_1'$.

(2) The interferometric measurement is performed to obtain the phase $\phi_1$, and at the same time the correct oscillation wavelength $\lambda_1$ at this time is measured.

(3) The variable wavelength laser 101 is caused to oscillate while the wavelength is changed to the other wavelength $\lambda_2'$.

(4) The interferometric measurement is performed to obtain the phase $\phi_2$, and at the same time the correct oscillation wavelength $\lambda_2$ at this time is measured.

(5) The phases $\phi_1$, $\phi_2$ and the wavelengths $\lambda_1$, $\lambda_2$ are substituted in Expressions (1), (2), and (4) to calculate the distance L to the object 110.

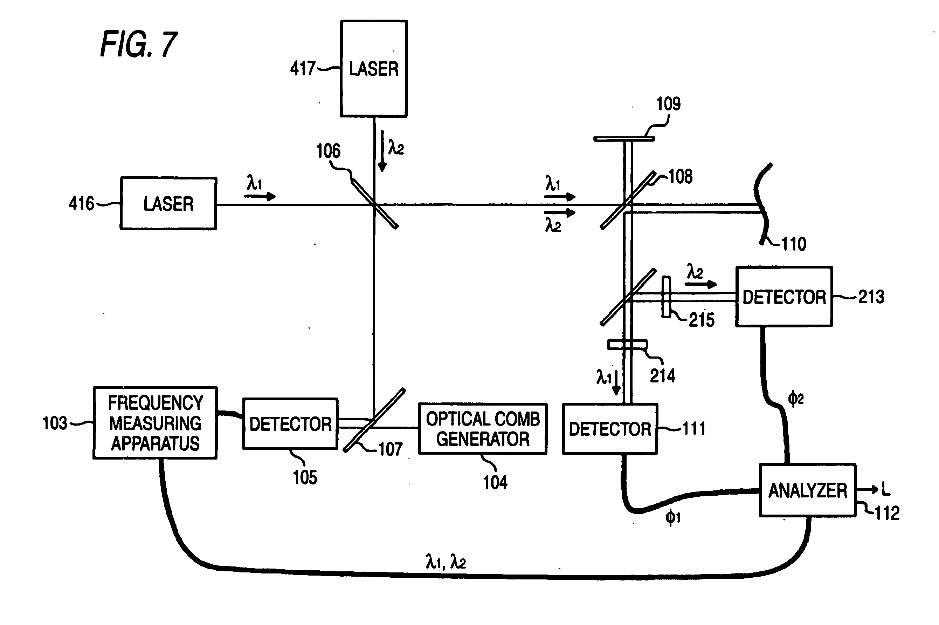

In the case where the technique of the invention is employed, even when an inexpensive laser having a low stability of the oscillation wavelength is used as in a second embodiment shown in Fig. 7, an interferometric measurement having a wide range can be realized by a synthetic wavelength.

In the embodiment, a laser 416 which outputs the laser beam of the wavelength $\lambda_1$, and a laser 417 which outputs the laser beam of the wavelength $\lambda_2$ impinge on the interference optical system configured by the reference mirror 109 and the target 110, while being coaxially superimposed on each other. An interferometric measurement is performed by using the laser beams of the wavelengths $\lambda_1$, $\lambda_2$, the respective phases $\phi_1$, $\phi_2$ are obtained, and the difference $\phi_S$ is calculated. The correct value of the wavelength $\lambda_S$ in this case is correctly calculated by using $\lambda_1$ and $\lambda_2$ obtained by the frequency measuring system configured by the detector 105 and the frequency measuring apparatus 103. The distance L to the object 110 can be obtained from the obtained synthetic phase $\phi_S$ and synthetic wavelength $\lambda_S$. In the embodiment in which the wavelengths $\lambda_1$, $\lambda_2$ at the instants when the phases $\phi_1$, $\phi_2$ are respectively measured are obtained, even when the frequencies of the lasers 416, 417 are unstable, the unstable frequencies do not largely affect the measurement of the geometric distance L.

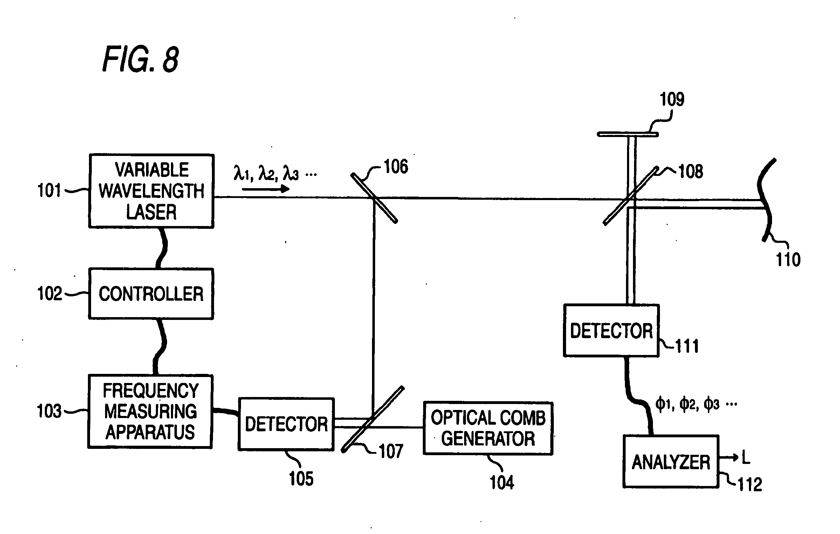

In an interferometric measurement in which the measurement range is expanded by a synthetic wavelength of two wavelengths, the measurement resolution depends on the synthetic wavelength $\lambda_S$ and the division number of the synthetic phase $\phi_S$. When $\lambda_S = 10$ mm and the division number of $\phi_S$ obtained from the difference between $\phi_2$ and $\phi_1$ is 500, for example, the measurement resolution is about 10 $\mu$m. By contrast, when the number of wavelengths used in the measurement is increased and kinds of synthetic wavelengths which can be produced by combinations are increased, a measurement which has a high resolution while ensuring a wide range can be easily realized. As in a further not claimed example shown in Fig. 8, the wavelength of the variable wavelength laser 101 is switched to $\lambda_1$, $\lambda_2$, and $\lambda_3$, and the phase differences $\phi_1$, $\phi_2$ and $\phi_3$ of the reference and measurement light beams are obtained at the respective wavelengths. From the phase difference $\phi_{i,j}$ at the synthetic wavelength $\lambda_{Si,j}$ which is produced by a combination of wavelengths, the position and displacement of the object 110 can be measured in a wide range and with a high resolution.

The measurement procedure of this example is summarized as follows.

(1) The oscillation wavelength of the variable wavelength laser 101 is controlled to the designed wavelength $\lambda_1$.

(2) The interferometric measurement is performed to obtain the phase $\phi_1$.

(3) The oscillation wavelength of the variable wavelength laser 101 is controlled to the designed wavelength $\lambda_2$.

(4) The interferometric measurement is performed to obtain the phase $\phi_2$.

(5) The oscillation wavelength of the variable wavelength laser 101 is controlled to the designed wavelength $\lambda_3$.

(6) The interferometric measurement is performed to obtain the phase $\phi_3$.

(7) From a combination of the phase differences $\phi_1$, $\phi_2$ and $\phi_3$, the phase difference $\phi_{i,j}$ is calculated, and the distance L to the object 110 is calculated.

For example, the case where $\lambda_1$ = 1 $\mu$m, $\lambda_2$ = 0.9999 $\mu$m, and $\lambda_3$ = 0,98 $\mu$m will be considered. In this case, the synthetic wavelength $\lambda_{S21}$ of the combination of $\lambda_1$ and $\lambda_2$ is 9,999 $\mu$m, and the synthetic wavelength $\lambda_{S31}$ of the combination of $\lambda_3$ and $\lambda_1$ is 49 $\mu$m. When it is assumed that the division numbers of $\phi_{S21}$ and $\phi_{S31}$ derived on the basis of the respective synthetic wavelengths are equal to 500 in the same manner as the above-described example, a measurement with a resolution of about 10 $\mu$m is enabled in the case of $\lambda_{S21}$, and that with a resolution of about 50 nm is enabled in the case of $\lambda_{S31}$. When a measurement result at a wavelength of one of $\lambda_1$, $\lambda_2$, and $\lambda_3$ is used together, a measurement is enabled in a range of 10 mm with a resolution of 1 nm.

When this configuration is to be realized , the configuration can be easily realized in the case of, for example, Fig. 2 or 6, by setting the number of the variable wavelengths to three. In the case of Fig. 4, a laser which oscillates three wavelengths is used, and, in the case of Fig. 6, three kinds of lasers are used, whereby the configuration can be easily realized. It is apparent that, also in the case of four or more wavelengths, the configuration can be easily realized in a similar manner.

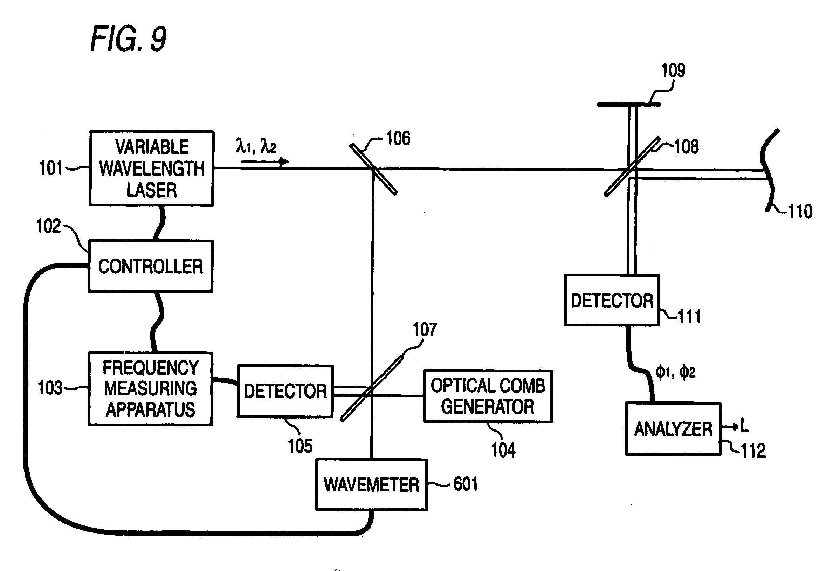

In each of the embodiments, basically, the optical comb generator 104 which is described as an apparatus for measuring the frequency of a light beam can perform high resolution on each restricted frequency region in the spectral spacing of the comb. Among light beams the frequencies in the optical comb 104, therefore, the light beam of the frequency with which interference is caused to produce the beat signal must be determined, or namely the order N must be separately determined. In the case where the order N cannot be determined because of reserved values of the oscillation frequency of the laser, the resolution of the laser frequency in the case of variation, or the like, as in a third embodiment shown in Fig. 9, the order N may be determined in combination with means for measuring the wavelength, such as a wavemeter 601, the wavelengths $\lambda_1$, $\lambda_2$ of the variable wavelength laser 101 may be measured, and the order may be used in the control of the oscillation frequency.

When measurement values are to be obtained at plural wavelengths such as $\lambda_1$ and $\lambda_2$, a measurement may be performed by using $\lambda_2$ in which a wavelength difference $\Delta\lambda$ is relatively formed with respect to the wavelength $\lambda_1$, and the distance L to the object 110 may be measured on the basis of the synthetic wavelength of $\lambda_1$ and $\lambda_2$.

When the frequency of a light beam is to be measured, an optical comb in which $f_{CEO}$ is correctly set is usually required, as described in "SANSOKEN TODAY Vol. 8 No. 1 MODE DOKI FIBER LASER O MOCHIITA KOTAIIKI OPTICAL COMB http://www.aist.go.jp/aisti_i/aistinfo/aist_today/vo108_01/p29.html". In order to satisfy the request, an optical comb having a frequency band which is sufficiently broad for allowing $f_{CEO}$ to be determined is necessary.

On the other hand, in the case of a measurement using a synthetic wavelength, the correctness of the relative wavelength difference $\Delta\lambda$ between $\lambda_1$ and $\lambda_2$ largely affects the measurement accuracy as indicated in Expression (3). Even when an optical comb in which an absolute value is obscure is used, and the value of $\Delta\lambda$ is set to determine the synthetic wavelength $\lambda_S$, therefore, a measurement can be performed with an accuracy which is practically sufficiently high. In determination of $\Delta\lambda$, a value corresponding to the order N is added to the beat frequency $\Delta f_1$ which is generated by the laser beam of the wavelength $\lambda_1$ and the optical comb, and the beat frequency $\Delta f_2$ which is generated by the laser beam of the wavelength $\lambda_2$ and the optical comb, and $\Delta\lambda$ is converted from $\Delta f_{12}$. Therefore, an optical comb which is to be used in the frequency measurement useful in the proposed lightwave interferometer may be a device having a minimum performance which covers the wavelength region to be used in the measurement. Consequently, the optical comb can be realized at a lower price.

In the above-described embodiments, a planar mirror is used as the reference mirror 109. Alternatively, a retroreflector in which the optical axis alignment is easily performed, and the adjustment is facilitated may be used. A retroreflector may be attached to the surface of the object 110.

## Claims

1. A multiwavelength interferometric displacement measuring method, the method comprising steps of:

   obtaining, by using simultaneously-output laser beams of a plurality of wavelengths, interference measurement values that are measured at the respective wavelengths;
   interferometrically measuring a distance from a body of an interferometer to an object (110) or a displacement by expanding a measurement range using a synthetic wavelength that is equivalently longer than the wavelengths of the laser beams from combinations of the wavelengths; and **characterised by**
   measuring the wavelengths of the laser beams by using a frequency-measuring system (103) comprising an optical comb (104) and one detector (105) onto which the laser beams of the plurality of wavelengths are simultaneously incident.

2. A multiwavelength interferometric displacement measuring method according to claim 1, further comprising:

> obtaining laser beams of a plurality of predetermined wavelengths by performing a feedback control (102) based on an oscillation wavelength of variable wavelength laser measured by using the optical comb (104).

**3.** A multiwavelength interferometric displacement measuring method according to claim 1, wherein the step of the obtaining the interference measurement values is to cause a variable wavelength laser (201) to oscillate and an arbitrary wavelength to obtain interference measurement values at the plurality of wavelengths;
wherein the step of measuring the wavelengths of the laser beams is to measure wavelengths of laser beams at timings when the respective interference measurement values are obtained by the optical comb (104), and
wherein the step of interfermetrically measuring is to calculate the distance from the body of the interferometer to the object based on the obtained interference measurement values and the measured wavelengths.

**4.** A multiwavelength intererometric displacement measuring method according to claim 1, wherein the step of the obtaining the interference measurement values is to obtain the interferometric measurement values based on the wavelengths of laser beams oscillated from a plurality of lasers (416, 417),
wherein the step of measuring the wavelengths of the laser beams is to measure the wavelengths of laser beams oscillated from the plurality of lasers by the optical comb (104), and
wherein the step of interferometrically measuring is to calculate the distance from the body of the interferometer to the object based on the obtained interference measurement values and the measured wavelengths.

**5.** A multiwavelength interferometric displacement measuring method according to any one of claims 1 to 4, wherein the step of obtaining the interference measurement values is to, when interference measurement values are to be obtained at the plurality of wavelengths, perform an interferometric measurement by performing a control for correctly giving a wavelength difference relatively with respect to one wavelength, or measure a wavelength difference at a timing when measurement values are obtained at wavelengths as a relative difference with respect to one wavelength.

**6.** A multiwavelength interferometric displacement measuring method according to any one of claims 1 to 5, wherein the step of interferometrically measuring is to calculate a frequency difference while adding a value corresponding to an order of the optical comb to a beat frequency which is generated by the laser beam of one wavelength and the optical comb, and a beat frequency which is generated by the laser beam of another wavelength and the optical comb, and to convert the frequency difference to a wavelength difference.

**7.** A multiwavelength interferometric displacement measuring method according to any one of claims 1 to 6, wherein the step of interferometrically measuring is to calculate a phase difference ($\Phi_s$) at a synthetic wavelength ($\lambda_s$) of a combination of two of three or more wavelengths, and determine the distance (L) by:

$$L = (\Phi_s/2\pi)^*(\lambda_s/2)$$

**8.** A multiwavelength interferometric displacement measuring apparatus comprising:

> a detector (111) which is adapted to use simultaneously-output laser beams of a plurality of wavelengths to obtain interference measurement values at the respective wavelengths;
> an analyzer (112) adapted to interferometrically measure a distance from a body of an interferometer to an object (110) or a displacement, by expanding a measurement range by a synthetic wavelength that is equivalently longer than the wavelengths of the laser beams from combinations of wavelengths; and **characterised by**
> a frequency-measuring system (103) comprising an optical comb generator (104) adapted to generate an optical comb for measuring the wavelengths of the laser beams, and one detector (105) onto which the laser beams of a plurality of wavelengths are simultaneously incident.

**9.** A multiwavelength interferometric displacement measuring apparatus according to claim 8, further comprising;
a controller (102) adapted to measure an oscillation wavelength of a variable wavelength laser (101) by using the optical comb, and perform a feedback control, to obtain a plurality of predetermined wavelengths.

**10.** A multiwavelength interferometric displacement measuring apparatus according to claim 8, further comprising:

> a variable wavelength laser (101) adapted to output the laser beams of an arbitrary wavelength; and

a frequency measuring apparatus adapted to measure the wavelengths of the laser beams when the respective interference measurement values are obtained, by the optical comb, wherein the analyzer is adapted to calculate the distance from the body of the interferometer to the object based on the measured wavelengths.

11. A multiwavelength interferometric displacement measuring apparatus according to claim 8, further comprising:

a plurality of lasers (416, 417) adapted to output the laser beams of the respective difference wavelengths; and

a frequency measuring apparatus adapted to measure the wavelengths of laser beams oscillated from the lasers using the optical comb, wherein the analyzer calculates the distance from the body of the interferometer to the object based on the measured wavelengths.

12. A multiwavelength interferometric displacement measuring apparatus according to any one of claims 8 to 11, wherein the detector is adapted to, when interference measurement values are to be obtained at the plurality of wavelengths, perform an interferometric measurement by performing a control for correctly giving a wavelength difference relatively with respect to one wavelength, or measures a wavelength difference at a timing when measurement values are obtained at wavelengths, as a relative difference with respect to one wavelength.

13. A multiwavelength interferometric displacement measuring apparatus according to any one of claims 8 to 12 wherein the analyzer is adapted to calculate a frequency difference while adding a value corresponding to an order of the optical comb to a beat frequency which is generated by the laser beam of one wavelength and the optical comb, and a beat frequency which is generated by the laser beam of another wavelength and the optical comb, and covert the frequency difference to a wavelength difference.

14. A multiwavelength interferometric displacement measuring method according to any one of claims 1 to 6, wherein the step of interferometrically measuring is to calculate a phase difference ($\Phi_s$) at a synthetic wavelength ($\lambda_s$) of a combination of two of three or more wavelengths, and determine the distance (L) by:

$$L = (\Phi_s/2\pi)*(\lambda_s/2)$$

**Patentansprüche**

1. Verfahren zur Messung des Versatzes mittels Interferometrie mit mehreren Wellenlängen, wobei das Verfahren die folgenden Schritte umfasst:

Erhalten, unter Verwendung gleichzeitig ausgegebener Laserstrahlen einer Mehrzahl Wellenlängen, von Interferenzmesswerten, die bei den jeweiligen Wellenlängen gemessen werden; interferometrisches Messen eines Abstands von einem Körper eines Interferometers zu einem Objekt (110) oder eines Versatzes durch Erweitern eines Messbereichs unter Verwendung einer synthetischen Wellenlänge, die entsprechend länger als die Wellenlängen der Laserstrahlen aus Kombinationen der Wellenlängen ist; und **gekennzeichnet durch** das Messen der Wellenlängen der Laserstrahlen unter Verwendung eines Frequenzmesssystems (103), umfassend einen optischen Kamm (104) und einen Detektor (105), auf den die Laserstrahlen der Mehrzahl Wellenlängen gleichzeitig einfallen.

2. Verfahren zur Messung des Versatzes mittels Interferometrie mit mehreren Wellenlängen nach Anspruch 1, überdies umfassend:

Erhalten von Laserstrahlen einer Mehrzahl vorbestimmter Wellenlängen durch Ausführen einer Regelung (102) auf Grundlage einer Oszillationswellenlänge eines Lasers veränderlicher Wellenlänge, die unter Verwendung des optischen Kamms (104) gemessen wird.

3. Verfahren zur Messung des Versatzes mittels Interferometrie mit mehreren Wellenlängen nach Anspruch 1, wobei der Schritt des Erhaltens der Interferenzmesswerte darin besteht, zu bewirken, dass ein Laser (201) veränderlicher Wellenlänge schwingt und eine beliebige Wellenlänge Interferenzmesswerte bei der Mehrzahl Wellenlängen erhält; wobei der Schritt des Messens der Wellenlängen der Laserstrahlen darin besteht, Wellenlängen von Laserstrahlen zu zeitlichen Abstimmungen zu messen, zu denen die jeweiligen Interferenzmesswerte von dem optischen Kamm (104) erhalten werden, und wobei der Schritt des interferometrischen Messens darin besteht, den Abstand von dem Körper des Interferometers zu dem Objekt auf Grundlage der erhaltenen Interferenzmesswerte und der gemessenen Wellenlängen zu berechnen.

4. Verfahren zur Messung des Versatzes mittels Interferometrie mit mehreren Wellenlängen nach Anspruch 1, wobei der Schritt des Erhaltens der Interferenzmesswerte darin besteht, die interferometrischen Messwerte auf Grundlage der Wellenlängen von Laserstrahlen zu erhalten, die von einer Mehrzahl Laser (416, 417) in Schwingung versetzt werden,

wobei der Schritt des Messens der Wellenlängen der Laserstrahlen darin besteht, die Wellenlängen der Laserstrahlen, die von der Mehrzahl Laser in Schwingung versetzt werden, durch den optischen Kamm (104) zu messen, und

wobei der Schritt des interferometrischen Messens darin besteht, den Abstand von dem Körper des Interferometers zu dem Objekt auf Grundlage der erhaltenen Interferenzmesswerte und der gemessenen Wellenlängen zu berechnen.

5. Verfahren zur Messung des Versatzes mittels Interferometrie mit mehreren Wellenlängen nach einem der Ansprüche 1 bis 4, wobei der Schritt des Erhaltens der Interferenzmesswerte darin besteht, wenn die Interferenzmesswerte bei der Mehrzahl Wellenlängen zu erhalten sind, eine interferometrische Messung durch Ausführen einer Regelung zum korrekten Verursachen einer Wellenlängendifferenz relativ in Bezug auf eine Wellenlänge durchzuführen oder eine Wellenlängendifferenz zu einer zeitlichen Abstimmung zu messen, zu der die Messwerte bei Wellenlängen als eine relative Differenz in Bezug auf eine Wellenlänge erhalten werden.

6. Verfahren zur Messung des Versatzes mittels Interferometrie mit mehreren Wellenlängen nach einem der Ansprüche 1 bis 5, wobei der Schritt des interferometrischen Messens darin besteht, eine Frequenzdifferenz während des Hinzufügens eines Werts entsprechend einer Größenordnung des optischen Kamms zu einer Überlagerungsfrequenz zu berechnen, die von dem Laserstrahl einer Wellenlänge und dem optischem Kamm erzeugt wird, und einer Überlagerungsfrequenz, die von dem Laserstrahl einer anderen Wellenlänge und dem optischen Kamm erzeugt wird, und die Frequenzdifferenz in eine Wellenlängendifferenz zu wandeln.

7. Verfahren zur Messung des Versatzes mittels Interferometrie mit mehreren Wellenlängen nach einem der Ansprüche 1 bis 6, wobei der Schritt des interferometrischen Messens darin besteht, eine Phasenverschiebung ($\Phi_s$) bei einer synthetischen Wellenlänge ($\lambda_s$) einer Kombination aus zwei von drei oder mehr Wellenlängen zu berechnen und den Abstand (L) zu ermitteln durch:

$$L = (\Phi s / 2\pi) * \left(\frac{\lambda s}{2}\right)$$

8. Vorrichtung zur Messung des Versatzes mittels Interferometrie mit mehreren Wellenlängen, umfassend:

einen Detektor (111), der angepasst ist, die gleichzeitig ausgegebenen Laserstrahlen einer Mehrzahl Wellenlängen zu nutzen, um Interferenzmesswerte bei den jeweiligen Wellenlängen zu erhalten;

einen Analysator (112), der angepasst ist, einen Abstand von einem Körper eines Interferometers zu einem Objekt (110) oder einen Versatz interferometrisch zu messen durch Erweitern eines Messbereichs durch eine synthetische Wellenlänge, die entsprechend länger als die Wellenlängen der Laserstrahlen aus Kombinationen der Wellenlängen ist; und **gekennzeichnet durch**

ein Frequenzmesssystem (103), umfassend einen Generator (104) für einen optischen Kamm, der angepasst ist, einen optischen Kamm zur Messung der Wellenlängen der Laserstrahlen zu erzeugen, und einen Detektor (105), auf den die Laserstrahlen einer Mehrzahl Wellenlängen gleichzeitig einfallen.

9. Vorrichtung zur Messung des Versatzes mittels Interferometrie mit mehreren Wellenlängen nach Anspruch 8, überdies umfassend:

einen Regler (102), der angepasst ist, eine Oszillationswellenlänge eines Lasers (101) veränderlicher Wellenlänge unter Verwendung des optischen Kamms zu messen, und eine Regelung auszuführen, um eine Mehrzahl vorbestimmter Wellenlängen zu erhalten.

10. Vorrichtung zur Messung des Versatzes mittels Interferometrie mit mehreren Wellenlängen nach Anspruch 8, überdies umfassend:

einen Laser (101) veränderlicher Wellenlänge, der angepasst ist, die Laserstrahlen einer beliebigen Wellenlänge auszugeben; und

eine Frequenzmessvorrichtung, die angepasst ist, die Wellenlängen der Laserstrahlen durch den optischen Kamm zu messen, wenn die jeweiligen Interferenzmesswerte erhalten werden,

wobei der Analysator angepasst ist, den Abstand von dem Körper des Interferometers zu dem Objekt auf Grundlage der gemessenen Wellenlänge zu berechnen.

11. Vorrichtung zur Messung des Versatzes mittels Interferometrie mit mehreren Wellenlängen nach Anspruch 8, überdies umfassend:

eine Mehrzahl Laser (416, 417), die angepasst sind, die Laserstrahlen der jeweiligen unterschiedlichen Wellenlängen auszugeben; und eine Frequenzmessvorrichtung, die angepasst ist, unter Verwendung des optischen Kamms die Wellenlängen der Laserstrahlen zu messen, die von den Lasern in Schwingung versetzt werden, wobei der Analysator den Abstand von dem Körper des Interferometers zu dem Objekt auf Grundlage der gemessenen Wellenlängen berechnet.

12. Vorrichtung zur Messung des Versatzes mittels Interferometrie mit mehreren Wellenlängen nach einem der Ansprüche 8 bis 11, wobei der Detektor angepasst ist, wenn Interferenzmesswerte bei der Mehrzahl Wellenlängen erhalten werden sollen, eine interferometrische Messung durch Ausführen einer Regelung zum korrekten Verursachen einer Wellenlängendifferenz relativ in Bezug auf eine Wellenlänge durchzuführen oder eine Wellenlängendifferenz zu einer zeitlichen Abstimmung zu messen, zu der die Messwerte bei Wellenlängen erhalten werden, als relative Differenz in Bezug auf eine Wellenlänge.

13. Vorrichtung zur Messung des Versatzes mittels Interferometrie mit mehreren Wellenlängen nach einem der Ansprüche 8 bis 12, wobei der Analysator angepasst ist, eine Frequenzdifferenz während des Hinzufügens eines Werts entsprechend einer Größenordnung des optischen Kamms zu einer Überlagerungsfrequenz zu berechnen, die von dem Laserstrahl einer Wellenlänge und dem optischem Kamm erzeugt wird, und einer Überlagerungsfrequenz, die von dem Laserstrahl einer anderen Wellenlänge und dem optischem Kamm erzeugt wird, und die Frequenzdifferenz in eine Wellenlängendifferenz umzuwandeln.

14. Verfahren zur Messung des Versatzes mittels Interferometrie mit mehreren Wellenlängen nach einem der Ansprüche 1 bis 6, wobei der Schritt des interferometrischen Messens darin besteht, eine Phasenverschiebung ($\Phi_s$) bei einer synthetischen Wellenlänge ($\lambda_s$) einer Kombination aus zwei von drei oder mehr Wellenlängen zu berechnen und den Abstand (L) zu bestimmen durch:

$$L = (\Phi s / 2\pi) * \left(\frac{\lambda s}{2}\right)$$

**Revendications**

1. Procédé de mesure de déplacement par interférométrie à multiples longueurs d'onde, le procédé comprenant les étapes :

d'obtention, en utilisant des faisceaux laser sortis simultanément d'une pluralité de longueurs d'onde, de valeurs de mesure d'interférence qui sont mesurées aux longueurs d'onde respectives ;
de mesure par interférométrie d'une distance d'un corps d'un interféromètre à un objet (110) ou d'un déplacement en étendant d'une plage de mesure en utilisant une longueur d'onde synthétique qui est de manière équivalente plus longue que les longueurs d'onde des faisceaux laser provenant des combinaisons des longueurs d'onde ; et **caractérisé par**
la mesure des longueurs d'onde des faisceaux laser en utilisant un système de mesure de fréquence (103) comprenant un peigne optique (104) et un détecteur (105) que les faisceaux laser de la pluralité de longueurs d'onde frappent simultanément.

2. Procédé de mesure de déplacement par interférométrie à multiples longueurs d'onde selon la revendication 1, comprenant en outré :

l'obtention de faisceaux laser d'une pluralité de longueurs d'onde prédéterminées en effectuant une commande à rétroaction (102) sur la base d'une longueur d'onde d'oscillation d'un laser à longueur d'onde variable mesurée en utilisant le peigne optique (104).

3. Procédé de mesure de déplacement par interférométrie à multiples longueurs d'onde selon la revendication 1, dans lequel l'étape d'obtention des valeurs de mesure d'interférence consiste à amener un laser à longueur d'onde variable (201) à osciller à une longueur d'onde arbitraire pour obtenir des valeurs de mesure d'interférence à la pluralité de longueurs d'onde ;
dans lequel l'étape de mesure des longueurs d'onde des faisceaux laser consiste à mesurer les longueurs d'onde de faisceaux laser à des synchronisations auxquelles les valeurs de mesure d'interférence respectives sont obtenues par le peigne optique (104), et
dans lequel l'étape de mesure par interférométrie consiste à calculer la distance du corps de l'interféromètre à l'objet sur la base des valeurs de mesure d'interférence obtenues et des longueurs d'onde mesurées.

4. Procédé de mesure de déplacement par interférométrie à multiples longueurs d'onde selon la revendication 1, dans lequel l'étape d'obtention des valeurs de mesure d'interférence consiste à obtenir les valeurs de mesure par interférométrie sur la base des longueurs d'onde de faisceaux laser mis en oscillation à partir d'une pluralité de lasers (416, 417), dans lequel l'étape de mesure des longueurs d'onde des faisceaux laser consiste à mesurer les longueurs d'onde de faisceaux laser mis en oscillation à partir de la pluralité de lasers par le peigne optique (104), et dans lequel l'étape de mesure par interférométrie consiste à calculer la distance du corps de l'interféromètre à l'objet sur la base des valeurs de mesure d'interférence obtenues et des longueurs d'onde mesurées.

5. Procédé de mesure de déplacement par interférométrie à multiples longueurs d'onde selon l'une quelconque des revendications 1 à 4, dans lequel l'étape d'obtention des valeurs de mesure d'interférence consiste à, lorsque des valeurs de mesure d'interférence doivent être obtenues à la pluralité de longueurs d'onde, effectuer une mesure par interférométrie en effectuant une commande pour donner correctement une différence de longueur d'onde de manière relative par rapport à une longueur d'onde, ou mesurer une différence de longueur d'onde à une synchronisation à laquelle des valeurs de mesure sont obtenues à des longueurs d'onde en tant que différence relative par rapport à une longueur d'onde.

6. Procédé de mesure de déplacement par interférométrie à multiples longueurs d'onde selon l'une quelconque des revendications 1 à 5, dans lequel l'étape de mesure par interférométrie consiste à calculer une différence de fréquence tout en ajoutant une valeur correspondant à un ordre du peigne optique à une fréquence de battement qui est générée par le faisceau laser d'une longueur d'onde et le peigne optique, et une fréquence de battement qui est générée par le faisceau laser d'une autre longueur d'onde et le peigne optique, et à convertir la différence de fréquence en une différence de longueur d'onde.

7. Procédé de mesure de déplacement par interférométrie à multiples longueurs d'onde selon l'une quelconque des revendications 1 à 6, dans lequel l'étape de mesure par interférométrie consiste à calculer une différence de phase ($\Phi_S$) à une longueur d'onde synthétique ($\lambda_S$) d'une combinaison de deux de trois longueurs d'onde ou plus, et déterminer la distance (L) par :

$$L = (\Phi_S/2\pi) * (\lambda_S/2).$$

8. Appareil de mesure de déplacement par interférométrie à multiples longueurs d'onde comprenant :

un détecteur (111) qui est conçu pour utiliser des faisceaux laser sortis simultanément d'une pluralité de longueurs d'onde pour obtenir des valeurs de mesure d'interférence aux longueurs d'onde respectives ;
un analyseur (112) conçu pour mesurer par interférométrie une distance d'un corps d'un interféromètre à un objet (110) ou un déplacement, par extension d'une plage de mesure par une longueur d'onde synthétique qui est plus longue de manière équivalente que les longueurs d'onde des faisceaux laser des combinaisons de longueurs d'onde ; et **caractérisé par**
un système de mesure de fréquence (103) comprenant un générateur de peigne optique (104) conçu pour générer un peigne optique pour mesurer les longueurs d'onde des faisceaux laser, et un détecteur (105) que les faisceaux laser d'une pluralité de longueurs d'onde frappent simultanément.

9. Appareil de mesure de déplacement par interférométrie à multiples longueurs d'onde selon la revendication 8, comprenant en outré :

un contrôleur (102) conçu pour mesurer une longueur d'onde d'oscillation d'un laser à longueur d'onde variable (101) en utilisant le peigne optique, et effectuer une commande à rétroaction, pour obtenir une pluralité de longueurs d'onde prédéterminées.

10. Appareil de mesure de déplacement par interférométrie à multiples longueurs d'onde selon la revendication 8, comprenant en outré :

un laser à longueur d'onde variable (101) conçu pour fournir les faisceaux laser d'une longueur d'onde arbitraire ; et
un appareil de mesure de fréquence conçu pour mesurer les longueurs d'onde des faisceaux laser lorsque les valeurs de mesure d'interférence respectives sont obtenues, par le peigne optique,
dans lequel l'analyseur est conçu pour calculer la distance du corps de l'interféromètre à l'objet sur la base des longueurs d'onde mesurées.

11. Appareil de mesure de déplacement par interférométrie à multiples longueurs d'onde selon la revendication 8, comprenant en outré :

une pluralité de lasers (416, 417) conçus pour fournir les faisceaux laser des longueurs d'onde de différence respectives ; et
un appareil de mesure de fréquence conçu pour mesurer les longueurs d'onde de faisceaux laser mis en oscillation à partir des lasers en utilisant le peigne optique,

dans lequel l'analyseur calcule la distance du corps de l'interféromètre à l'objet sur la base des longueurs d'onde mesurées.

**12.** Appareil de mesure de déplacement par interférométrie à multiples longueurs d'onde selon l'une quelconque des revendications 8 à 11, dans lequel le détecteur est conçu, lorsque des valeurs de mesure d'interférence doivent être obtenues à la pluralité de longueurs d'onde, pour effectuer une mesure par interférométrie en effectuant une commande pour donner correctement une différence de longueur d'onde de manière relative par rapport à une longueur d'onde, ou mesurer une différence de longueur d'onde à une synchronisation à laquelle des valeurs de mesure sont obtenues à des longueurs d'onde, en tant que différence relative par rapport à une longueur d'onde.

**13.** Appareil de mesure de déplacement par interférométrie à multiples longueurs d'onde selon l'une quelconque des revendications 8 à 12, dans lequel l'analyseur est conçu pour calculer une différence de fréquence tout en ajoutant une valeur correspondant à un ordre du peigne optique à une fréquence de battement qui est générée par le faisceau laser d'une longueur d'onde et le peigne optique, et une fréquence de battement qui est générée par le faisceau laser d'une autre longueur d'onde et le peigne optique, et convertir la différence de fréquence en une différence de longueur d'onde.

**14.** Procédé de mesure de déplacement par interférométrie à multiples longueurs d'onde selon l'une quelconque des revendications 1 à 6, dans lequel l'étape de mesure par interférométrie consiste à calculer une différence de phase ($\Phi_S$) à une longueur d'onde synthétique ($\lambda_S$) d'une combinaison de deux de trois longueurs d'onde ou plus, et déterminer la distance (L) par :

$$L = (\Phi_S/2\pi) * (\lambda_S/2).$$

*FIG. 1*

frep

OPTICAL COMB

0

fceo

$f(N) = fceo + N \times frep$

FREQUENCY

EP 2 149 778 B1

## FIG. 2

EP 2 149 778 B1

## FIG. 3A

## FIG. 3B

*FIG. 4*

EP 2 149 778 B1

# FIG. 5

(a1) EXAMPLE 1 OF SPECTRUM
OF LASER

(a2) EXAMPLE 2 OF SPECTRUM
OF LASER

(a3) EXAMPLE 3 OF SPECTRUM
OF LASER
(CASE WHERE FREQUENCY OF $\lambda_2$ IS CHANGED)

(b1) EXAMPLE 1 OF FREQUENCY
OF BEAT SIGNAL

(b2) EXAMPLE 2 OF FREQUENCY
OF BEAT SIGNAL

(b3) EXAMPLE 3 OF FREQUENCY
OF BEAT SIGNAL
(CASE WHERE FREQUENCY OF $\lambda_2$ IS CHANGED)

EP 2 149 778 B1

FIG. 6

FIG.7

## FIG. 8

EP 2 149 778 B1

*FIG. 9*

EP 2 149 778 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000146517 A

- JP 2004340690 A

**Non-patent literature cited in the description**

- **J. E. GREIVENKAMP ; J. H. BRUNING.** Phase Shifting Interferometry In Optical Shop Testing. John Wiley & Sons, Inc, 560
- **KAJIMA et al.** Super-heterodyne laser interferometer using femtosecond frequency comb for linear encoder calibration system. *Proc. of SPIE,* 2007, vol. 6616

- **SCHUHLER et al.** Frequency-comb-referenced two wavelength source for absolute distance measurement. *Optics Letters,* 01 November 2006, vol. 31 (21), 3101
- **IP et al.** *Proc of SPIE,* 2006, vol. 6188
- MODE DOKI FIBER LASER O MOCHIITA KOTAIIKI OPTICAL COMB. *SANSOKEN TODAY,* vol. 8 (1, http://www.aist.go.jp/aisti_i/aistinfo/aist_today/vo108_01/p29.html